# EUROPÄISCHE PATENTSCHRIFT

(11) **EP 3 467 990 B1**
(45) Veröffentlichungstag und Bekanntmachung des Hinweises auf die Patenterteilung: **21.09.2022**
(21) Anmeldenummer: 18181072.2
(22) Anmeldetag: 02.07.2018
(51) Int. Cl.: B60L 53/14, B60L 53/22, B60L 53/30, B60L 53/31, B60L 53/51, B60L 53/53, B60L 55/00, H02J 7/34, H02J 7/35, H02J 7/02

(54) **ENERGIEBEREITSTELLUNGSEINRICHTUNG ZUM BEREITSTELLEN ELEKTRISCHER ENERGIE FÜR WENIGSTENS EIN ENDGERÄT SOWIE VERFAHREN ZUM BETREIBEN EINER ENERGIEBEREITSTELLUNGSEINRICHTUNG**
ENERGY SUPPLY DEVICE FOR PROVIDING ELECTRICAL ENERGY FOR AT LEAST ONE TERMINAL AND METHOD FOR OPERATING AN ENERGY SUPPLY DEVICE
DISPOSITIF DE FOURNITURE D'ÉNERGIE DESTINÉ À FOURNIR DE L'ÉNERGIE ÉLECTRIQUE À AU MOINS UN TERMINAL AINSI QUE PROCÉDÉ DE FONCTIONNEMENT D'UN DISPOSITIF DE FOURNITURE D'ÉNERGIE

(30) Priorität: 05.10.2017 DE 102017217729
(43) Veröffentlichungstag der Anmeldung: 10.04.2019
(73) Patentinhaber: AUDI AG, 85045 Ingolstadt (DE)
(72) Erfinder: Graßl, Tobias, 85095 Denkendorf (DE)

(56) Entgegenhaltungen:
- EP-A1- 2 110 923
- EP-A1- 2 725 676
- EP-A1- 2 751 902
- EP-A1- 2 784 899
- EP-A1- 3 021 446
- EP-A2- 2 450 221
- EP-A2- 2 572 431
- EP-B1- 2 572 431
- EP-B1- 2 751 902
- DE-A1-102011 079 430
- DE-A1-102011 083 741
- US-A1- 2004 130 292
- US-A1- 2010 096 921
- US-A1- 2011 057 724

## Beschreibung

Die Erfindung betrifft eine Energiebereitstellungseinrichtung zum Bereitstellen elektrischer Energie für wenigstens ein Endgerät, mit einem Netzanschluss zum Anschließen der Energiebereitstellungseinrichtung an ein Wechselstromnetz und mit einer Gleichrichtereinrichtung zum Umsetzen eines über den Netzanschluss zugeführten Wechselstroms in einen Gleichstrom in einem Zwischenkreis, wobei mehrere Spannungswandler und mehrere Gleichstromanschlüsse vorliegen, wobei die Spannungswandler jeweils einerseits zumindest zeitweise an den Zwischenkreis elektrisch angeschlossen und andererseits zumindest zeitweise mit einem Gleichstromanschluss der mehreren Gleichstromanschlüsse elektrisch verbunden sind, wobei mehrere der Gleichstromanschlüsse mit demselben der Spannungswandler und mehrere der Spannungswandler mit demselben der Gleichstromanschlüsse verbindbar sind, wobei an einem ersten der Gleichstromanschlüsse und einem anderen, zweiten der Gleichstromanschlüsse eine Schalteranordnung elektrisch angeschlossen ist, mittels der in einer ersten Schaltstellung entweder der erste Gleichstromanschluss oder der zweite Gleichstromanschluss mit einer Ausgangsseite des einen Spannungswandlers verbunden ist und in einer zweiten Schaltstellung der erste Gleichstromanschluss und der zweite Gleichstromanschluss elektrisch parallel mit der Ausgangsseite des einen Spannungswandlers verbunden sind. Die Erfindung betrifft weiterhin ein Verfahren zum Betreiben einer Energiebereitstellungseinrichtung.

Die Energiebereitstellungseinrichtung dient dem Bereitstellen elektrischer Energie für das wenigstens eine Endgerät, bevorzugt für mehrere Endgeräte. Das Endgerät beziehungsweise wenigstens eines der Endgeräte ist bevorzugt als Kraftfahrzeug ausgestaltet. Mithilfe der Energiebereitstellungseinrichtung kann dem Kraftfahrzeug elektrische Energie zum Laden eines Energiespeichers des Kraftfahrzeugs zugeführt werden. Der Energiespeicher liegt insbesondere in Form einer Traktionsbatterie vor, in welcher elektrische Energie zum Betreiben eines Traktionsantriebs des Kraftfahrzeugs zwischengespeichert wird beziehungsweise zwischengespeichert werden kann. Der Traktionsantrieb ist dazu ausgebildet, elektrische Energie, insbesondere in dem Energiespeicher beziehungsweise der Traktionsbatterie zwischengespeicherte elektrische Energie, in mechanische Energie umzusetzen, die auf ein Antreiben des Kraftfahrzeugs gerichtet ist.

Die Energiebereitstellungseinrichtung verfügt über den Netzanschluss, über welchen sie an das Wechselstromnetz anschließbar ist. Das Wechselstromnetz ist beispielsweise ein öffentliches Wechselstromnetz. Zusätzlich verfügt die Energiebereitstellungseinrichtung über die Gleichrichtereinrichtung, welche elektrisch einerseits an den Netzanschluss und andererseits an den Zwischenkreis angeschlossen ist. Die Gleichrichtereinrichtung dient dem Umsetzen des Wechselstroms, welcher dem Wechselstromnetz über den Netzanschluss entnommen wird, in den Gleichstrom, welcher in dem Zwischenkreis vorliegt.

Aus dem Stand der Technik ist beispielsweise die Druckschrift DE 10 2012 2010 284 A1 bekannt. Diese betrifft ein Verfahren zum Betrieb einer Ladestation eines Elektrofahrzeugs in einem Haushalt, die einen Gleichrichter, eine Schnittstelle zum Anschluss des Elektrofahrzeugs, ein Schaltsystem und einen Energiespeicher umfasst. Zum Laden des Energiespeichers wird der Gleichrichter wechselstromseitig mit dem Versorgungsnetz des Haushalts mittels des Schaltsystems verbunden. Wenn das Elektrofahrzeug über die Schnittstelle geladen wird, wird der Gleichrichter mittels des Schaltsystems vom Versorgungsnetz getrennt.

Weiterhin beschreibt die Druckschrift US 2004/0130292 A1 ein Verfahren oder eine Vorrichtung zum Aufladen von Batterien. Hierbei sind ein oder mehrere DC-DC Konverter vorgesehen, die einen oder mehrere Ladeanschlüsse aufweisen, die zum elektrischen Verbinden mit den Batterien ausgebildet sind. Die DC-DC Wandler sind zum selektiven Verbinden mit mehr als einem Ladeanschluss ausgebildet, um eine höhere Ladeleistung zu ermöglichen. Weitere Einrichtungen zur Stromversorgung sind aus den Druckschriften EP 2 725 676 A1, US 2011/0057724 A1 und EP 2 784 899 A1 bekannt.

Es ist Aufgabe der Erfindung, eine Energiebereitstellungseinrichtung vorzuschlagen, welche gegenüber anderen Energiebereitstellungseinrichtungen Vorteile aufweist, insbesondere einen äußerst flexiblen Betrieb ermöglicht und besonders bevorzugt einen hohen Integrationsgrad mehrerer Endgeräte ermöglicht.

Dies wird erfindungsgemäß mit einer Energiebereitstellungseinrichtung mit den Merkmalen des Anspruchs 1 und einem Verfahren zum Betreiben einer Energiebereitstellungseinrichtung mit Merkmalen des Anspruchs 7 erreicht. Dabei ist vorgesehen, dass in einer dritten Schaltstellung der Schalteranordnung der erste Gleichstromanschluss mit einer Eingangsseite eines der Spannungswandler und der zweite Gleichstromanschluss mit der Ausgangsseite des einen Spannungswandlers elektrisch verbunden und dieser Spannungswandler vom Zwischenkreis getrennt ist, sodass der erste Gleichstromanschluss über den Spannungswandler mit dem zweiten Gleichstromanschluss elektrisch verbindbar ist.

Weitere vorteilhafte Ausgestaltungen der Energiebereitstellungseinrichtung ergeben sich aus den abhängigen Ansprüchen.

Die Spannungswandler liegen in Form von Gleichspannungswandlern vor, dienen also der Umwandlung eines Gleichstroms wiederum in einen Gleichstrom. Beispielsweise weist der eingangsseitig eines der Spannungswandler vorliegende Gleichstrom eine erste Spannung und der ausgangsseitig dieses Spannungswandlers vorliegende Gleichstrom eine zweite Spannung auf, wobei die zweite Spannung von der ersten Spannung verschieden ist. Die Gleichstromanschlüsse dienen dem Anschließen des wenigstens einen Endgeräts, vorzugsweise mehrere Endgeräte. Insbesondere ist an jeden der Gleichstromanschlüsse ein Endgerät angeschlossen. Als Endgeräte können grundsätzlich beliebige Einrichtungen verwendet werden, unabhängig davon, ob sie elektrische Energie aufnehmen und/oder bereitstellen.

Vorstehend wurde bereits erwähnt, dass eines der Endgeräte in Form eines Kraftfahrzeugs vorliegen kann. Weitere Beispiele für Endgeräte sind eine Photovoltaikanlage, ein stationärer Energiespeicher zur Zwischenspeicherung elektrischer Energie und ein Haustechnikgerät, zum Beispiel eine Wärmepumpe. Gemeinsam ist den Endgeräten jedoch, dass sie mit Gleichstrom betrieben werden oder Gleichstrom für die Energiebereitstellungseinrichtung bereitstellen.

Jeder der Spannungswandler ist einerseits, insbesondere eingangsseitig, zumindest zeitweise mit dem Zwischenkreis elektrisch verbunden. Andererseits, also insbesondere ausgangsseitig, kann jeder der Spannungswandler mit wenigstens einem der Gleichstromanschlüsse elektrisch verbunden werden. Bevorzugt liegen ebenso viele Spannungswandler wie Gleichstromanschlüsse vor, sodass jeder der Spannungswandler mit zumindest genau einem der Gleichstromanschlüsse elektrisch verbindbar ist beziehungsweise umgekehrt.

In einer ersten Betriebsart der Energiebereitstellungseinrichtung ist es nun vorgesehen, dass mehrere der Gleichstromanschlüsse mit demselben der Spannungswandler elektrisch verbindbar beziehungsweise verbunden sind. In einer zweiten Betriebsart ist vorgesehen, dass mehrere der Spannungswandler mit demselben der Gleichstromanschlüsse elektrisch verbindbar oder verbunden sind. In einer dritten Betriebsart der Energiebereitstellungseinrichtung ist vorgesehen, dass zumindest der erste der Gleichstromanschlüsse über den einen der Spannungswandler mit dem anderen, zweiten der Gleichstromanschlüsse elektrisch verbindbar beziehungsweise verbunden ist. Die Energiebereitstellungseinrichtung ermöglicht das Durchführen von allen dreien der Betriebsarten.

Es sei darauf hingewiesen, dass es selbstverständlich vorgesehen sein kann, einige der Spannungswandler und einige der Gleichstromanschlüsse in einer der Betriebsarten und andere der Spannungswandler und andere der Gleichstromanschlüsse in einer anderen der Betriebsarten zu betreiben. Hierzu werden die Spannungswandler und die Gleichstromanschlüsse in mehrere Gruppen aufgeteilt, wobei jede der Gruppen in einer der Betriebsarten betrieben wird. Hierbei kann es vorgesehen sein, dass eine oder mehrere der Gruppen in der ersten Betriebsart, eine oder mehrere der Gruppen in der zweiten Betriebsart und/oder eine oder mehrere der Gruppen in der dritten Betriebsart betrieben werden.

In der ersten Betriebsart sollen mehrere Gleichstromanschlüsse mit einem einzigen Spannungswandler elektrisch verbunden werden. Das bedeutet, dass die an die Gleichstromanschlüsse angeschlossenen Endgeräte alle über diesen Spannungswandler mit elektrischer Energie versorgt werden oder über diesen Spannungswandler elektrische Energie in den Zwischenkreis einspeisen. Diese Vorgehensweise ist vor allem dann sinnvoll, wenn die momentane Istleistung oder die Nennleistung der Endgeräte gering ist, insbesondere in Summe kleiner ist als die Nennleistung des Spannungswandlers. Zudem müssen die Endgeräte, welche an die Gleichstromanschlüsse angeschlossen sind, dieselbe oder zumindest nahezu dieselbe Eingangsspannung beziehungsweise Ausgangsspannung aufweisen.

In der zweiten Betriebsart ist im Wesentlichen die umgekehrte Vorgehensweise wie in der ersten Betriebsart vorgesehen, nämlich das elektrische Verbinden mehrerer der Spannungswandler mit demselben Gleichstromanschluss. Dies kann durchgeführt werden, wenn die einzelnen Spannungswandler eine zu geringe Nennleistung aufweisen, insbesondere eine Nennleistung, welche kleiner ist als die an dem Gleichstromanschluss benötigte Istleistung beziehungsweise die Nennleistung des an den Gleichstromanschluss angeschlossenen Geräts.

In der dritten Betriebsart ist es vorgesehen, den ersten Gleichstromanschluss und den zweiten Gleichstromanschluss von dem Netzanschluss elektrisch zu entkoppeln. Stattdessen soll der erste Gleichstromanschluss eingangsseitig an den Spannungswandler und der zweite Gleichstromanschluss ausgangsseitig an den Spannungswandler angeschlossen werden. Dies ermöglicht die Übertragung elektrischer Energie zwischen dem ersten Gleichstromanschluss und dem zweiten Gleichstromanschluss beziehungsweise umgekehrt unter Umgehung des Zwischenkreises.

Sowohl in der ersten Betriebsart als auch in der zweiten Betriebsart ist es vorteilhaft, die Spannung des mittels der Gleichrichtereinrichtung bereitgestellten Gleichstroms anzupassen, vorzugsweise auf die Eingangsspannung desjenigen Endgeräts mit der größten Nennleistung beziehungsweise Istleistung. Durch diese Vorgehensweise werden Wandlerverluste in der Gleichrichtereinrichtung minimiert.

Dies soll anhand eines Beispiels verdeutlich werden. Beispielsweise liegen als Endgeräte die Photovoltaikanlage, das Kraftfahrzeug und ein Haustechnikgerät vor. Die Photovoltaikanlage speist elektrische Energie mit einer ersten Leistung in den Zwischenkreis ein, wohingegen dem Kraftfahrzeug elektrische Energie mit einer zweiten Leistung und dem Haustechnikgerät elektrische Energie mit einer dritten Leistung zugeführt werden soll. Die drei Endgeräte werden mit unterschiedlichen Spannungen betrieben. Die Summe aus zweiter Leistung und dritter Leistung ist größer als die erste Leistung, sodass elektrische Energie über den Netzanschluss aus dem Wechselstromnetz zugeführt werden soll, um die Differenz auszugleichen.

Um Verluste in den Spannungswandler, über welche die Endgeräte an den Zwischenkreis angebunden sind, zu verringern, ist es nun vorgesehen, die in dem Zwischenkreis vorliegende Spannung auf die Spannung des Endgeräts mit der höchsten Leistung anzupassen. Dies ist im Rahmen dieses Beispiels die zweite Leistung. Die von der Photovoltaikanlage bereitgestellte elektrische Energie wird mit einem oder mehreren der Spannungswandler auf die Zwischenkreisspannung eingestellt. Analog hierzu wird dem Haustechnikgerät elektrische Energie zugeführt, für welche der oder die entsprechenden Spannungswandler auf die von dem Endgerät benötigte Spannung angepasst wird.

Zumindest ein Teil der in dem Zwischenkreis benötigten Leistung kann anstelle über den Netzanschluss auch aus dem stationären Energiespeicher zugeführt werden. Im Rahmen des hier beschriebenen Beispiels ist der stationäre Energiespeicher jedoch von dem Zwischenkreis entkoppelt, insbesondere durch entsprechendes Ansteuern der Energiebereitstellungseinrichtung, insbesondere des entsprechenden Spannungswandlers.

Soll hingegen dem Kraftfahrzeug keine weitere elektrische Energie zugeführt werden, beispielsweise weil der Energiespeicher des Kraftfahrzeugs vollständig geladen ist, so ist es für den Fall, dass die erste Leistung größer ist als die dritte Leistung, vorgesehen, die in dem Zwischenkreis vorliegende Spannung auf die Spannung der Photovoltaikanlage einzustellen. Im Rahmen dieses Beispiels kann es vorgesehen sein, dass anstelle des Haustechnikgeräts der stationäre Energiespeicher an die Energiebereitstellungseinrichtung angeschlossen ist und mit der dritten Leistung geladen werden soll.

Beispielsweise ist die Leistung, mit welcher der Energiespeicher geladen werden kann, kleiner als die von der Photovoltaikanlage bereitgestellte Leistung. In diesem Fall kann über dem Netzanschluss elektrische Energie in das Wechselstromnetz eingespeist werden. Insbesondere zu diesem Zweck ist die Gleichrichtereinrichtung bevorzugt bidirektional ausgestaltet, ermöglicht also ein Rückspeisen von elektrischer Energie in das Wechselstromnetz.

Eine weitere Ausführungsform der Erfindung sieht vor, dass die Gleichrichtereinrichtung einen bidirektionalen Gleichrichter oder einen bidirektionalen ersten Gleichrichter und einen elektrisch zu dem ersten Gleichrichter parallel geschalteten unidirektionalen zweiten Gleichrichter aufweist. Auf die bevorzugte Verwendung des bidirektionalen Gleichrichters wurde bereits hingewiesen. Mithilfe des bidirektionalen Gleichrichters kann von der Gleichrichtereinrichtung sowohl elektrische Energie aus dem Wechselstromnetz entnommen und dem Zwischenkreis zugeführt werden als auch dem Zwischenkreis elektrische Energie entnommen und dem Wechselstromnetz zugeführt werden.

Es kann vorgesehen sein, dass der bidirektionale Gleichrichter der einzige Gleichrichter der Gleichrichtereinrichtung ist. Zur Kostenreduzierung können jedoch auch mehrere Gleichrichter mit geringerer Nennleistung verwendet werden, nämlich der erste Gleichrichter und der zweite Gleichrichter. Der erste Gleichrichter ist hierbei als bidirektionaler Gleichrichter ausgestaltet und ermöglicht insoweit die Rückspeisung von elektrischer Energie in das Wechselstromnetz. Der zweite Gleichrichter ist hingegen unidirektional ausgeführt, ermöglicht also lediglich das Gleichrichten von aus dem Wechselstromnetz entnommenem Wechselstrom in den Gleichstrom des Zwischenkreises. Selbstverständlich können alternativ auch mehrere bidirektionale Gleichrichter und/oder mehrere unidirektionale Gleichrichter die Gleichrichtereinrichtung bilden.

Eine bevorzugte weitere Ausführungsform der Erfindung sieht vor, dass die mehreren Gleichstromanschlüsse in oder an einem gemeinsamen Gehäuse der Energiebereitstellungseinrichtung angeordnet sind, in welchem die Gleichrichtereinrichtungen und die Spannungswandler vorliegen. Die Energiebereitstellungseinrichtung ist folglich hochintegriert ausgestaltet und stellt eine Zentraleinheit dar, an welcher zahlreiche Endgeräte geschlossen werden. Insbesondere liegt die Energiebereitstellungseinrichtung als Haustechnikzentrale vor.

Eine bevorzugte weitere Ausführungsform der Erfindung sieht vor, dass zumindest einer der Gleichstromanschlüsse, insbesondere jeder der Gleichstromanschlüsse, unter Umgehung der Spannungswandler elektrisch mit dem Zwischenkreis verbindbar ist. Eine derartige elektrische Verbindung wird vorzugsweise realisiert, wenn das Endgerät mit der in dem Zwischenkreis vorliegenden Spannung ordnungsgemäß betrieben werden kann. Durch das direkte Verbinden des Gleichstromanschlusses mit dem Zwischenkreis werden Verluste vermieden, welche ansonsten in dem Spannungswandler beziehungsweise den Spannungswandlern anfallen würden.

Im Rahmen einer weiteren Ausgestaltung der Erfindung ist vorgesehen, dass zumindest derjenige der Spannungswandler, über den der erste Gleichstromanschluss mit dem zweiten Gleichstromanschluss verbindbar ist, mittels eines Trennschalters von dem Zwischenkreis elektrisch entkoppelbar ist. Auf die Entkopplung des Spannungswandlers von dem Zwischenkreis wurde vorstehend bereits hingewiesen. Hierzu ist der Trennschalter vorgesehen. Durch das Entkoppeln des Spannungswandlers von dem Zwischenkreis können beide Gleichstromanschlüsse beziehungsweise die an diese angeschlossenen Endgeräte mit Spannungen betrieben werden, welche von der Spannung des Zwischenkreises verschieden ist. Dies ermöglicht einen besonders flexiblen Betrieb der Energiebereitstellungseinrichtung.

Die Erfindung sieht vor, dass an den ersten Gleichstromanschluss und den zweiten Gleichstromanschluss eine Schalteranordnung elektrisch angeschlossen ist, mittels der in einer ersten Schaltstellung entweder der erste Gleichstromanschluss oder der zweite Gleichstromanschluss mit einer Ausgangsseite des einen Spannungswandlers verbunden ist. Die Schalteranordnung ermöglicht also das flexible Verwenden des Spannungswandlers, indem entweder der erste Gleichstromanschluss oder der zweite Gleichstromanschluss an die Ausgangsseite des Spannungswandlers angeschlossen wird. Bei Vorliegen der ersten Schaltstellung der Schalteranordnung ist vorzugsweise die Eingangsseite des Spannungswandlers an den Zwischenkreis elektrisch angeschlossen, sodass über den Spannungswandler entweder dem Endgerät elektrische Energie aus dem Zwischenkreis zuführbar ist oder aber von dem Endgerät bereitgestellte elektrische Energie in den Zwischenkreis zurückgespeist werden kann.

Weiterhin sieht die Erfindung vor, dass in einer zweiten Schaltstellung der erste Gleichstromanschluss und der zweite Gleichstromanschluss elektrisch parallel mit der Ausgangsseite des einen Spannungswandlers verbunden sind. Dies ist vor allem vorteilhaft, wenn die beiden Gleichstromanschlüsse beziehungsweise die an diese angeschlossenen Endgeräte mit derselben Spannung betrieben werden und die Nennleistung des Spannungswandlers ausreicht, um beide Endgeräte zu versorgen. Aufgrund der Parallelschaltung der Gleichstromanschlüsse wird eine hohe Auslastung des Spannungswandlers und mithin ein guter Wirkungsgrad desselben erzielt.

Erfindungsgemäß ist vorgesehen, dass in einer dritten Schaltstellung der Schalteranordnung der erste Gleichstromanschluss mit einer Eingangsseite des einen Spannungswandlers und der zweite Gleichstromanschluss mit der Ausgangsseite des einen Spannungswandlers elektrisch verbunden ist. In der dritten Schaltstellung wird die vorstehend beschriebene dritte Betriebsart der Energiebereitstellungseinrichtung umgesetzt werden. Bevorzugt ist bei Vorliegen der dritten Schaltstellung der Schalteranordnung der Spannungswandler elektrisch von dem Zwischenkreis getrennt. Die dritte Schaltstellung ermöglicht einen Betrieb der an die Gleichstromanschlüsse angeschlossenen Endgeräte unabhängig von dem Zwischenkreis, sodass eine hohe Effizienz erreicht werden kann.

Schließlich kann im Rahmen einer weiteren bevorzugten Ausgestaltung der Erfindung vorgesehen sein, dass in einer vierten Schaltstellung der Schalteranordnung der erste Gleichstromanschluss und der zweite Gleichstromanschluss jeweils mit der Eingangsseite des einen Spannungswandlers elektrisch verbunden sind. In anderen Worten sind in der vierten Schaltstellung die beiden Gleichstromanschlüsse beziehungsweise die jeweiligen Endgeräte unmittelbar mit dem Zwischenkreis verbunden. Dies ermöglicht das Versorgen der Endgeräte mit elektrischer Energie oder umgekehrt das Zuführen von elektrischer Energie der Endgeräte in dem Zwischenkreis ohne Verluste, welche ansonsten in dem Spannungswandler anfallen würden. Selbstredend ist bei Vorliegen der vierten Schaltstellung bevorzugt die Eingangsseite des Spannungswandlers mit dem Zwischenkreis verbunden.

Gleichwohl im Rahmen dieser Beschreibung auf vier unterschiedliche Schaltstellungen eingegangen wird, müssen nicht alle dieser Schaltstellungen mittels der Schalteranordnung umsetzbar sein, wenngleich dies natürlich besonders vorteilhaft ist. So kann mittels der Schalteranordnung eine beliebige Kombination der Schaltstellungen umsetzbar sein, analog zu der Vorgehensweise hinsichtlich der Betriebsarten der Energiebereitstellungseinrichtung, auf welche hingewiesen wurde.

Die Erfindung betrifft selbstverständlich auch ein Stromnetz mit mehreren Endgeräten, an welches die Energiebereitstellungseinrichtung über ihre Gleichstromanschlüsse angeschlossen ist. Einerseits ist also die Energiebereitstellungseinrichtung über den Netzanschluss an das Wechselstromnetz angeschlossen und andererseits, nämlich über die Gleichstromanschlüsse, an die Endgeräte des Stromnetzes. Sowohl die Energiebereitstellungseinrichtung als auch die Endgeräte können gemäß den Ausführungen im Rahmen dieser Beschreibung ausgestaltet und/oder weitergebildet sein.

Die Erfindung betrifft weiterhin ein Verfahren zum Betreiben einer Energiebereitstellungseinrichtung mit den Merkmalen des Anspruchs 7 zum Bereitstellen elektrischer Energie für wenigstens ein Endgerät.

Auf die Vorteile einer derartigen Vorgehensweise beziehungsweise einer derartigen Ausgestaltung der Energiebereitstellungseinrichtung wurde bereits hingewiesen. Sowohl die Energiebereitstellungseinrichtung als auch das Verfahren zu ihrem Betreiben können gemäß den Ausführungen im Rahmen dieser Beschreibung weitergebildet sein, sodass auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Energiebereitstellungseinrichtung zum Bereitstellen elektrischer Energie für wenigstens ein Endgerät,
- Figur 2: eine Detaildarstellung eines Teils der Energiebereitstellungseinrichtung als ein Beipspiel, sowie
- Figur 3: eine Detaildarstellung eines Teils der Energiebereitstellungseinrichtung in einer zweiten Ausführungsform.

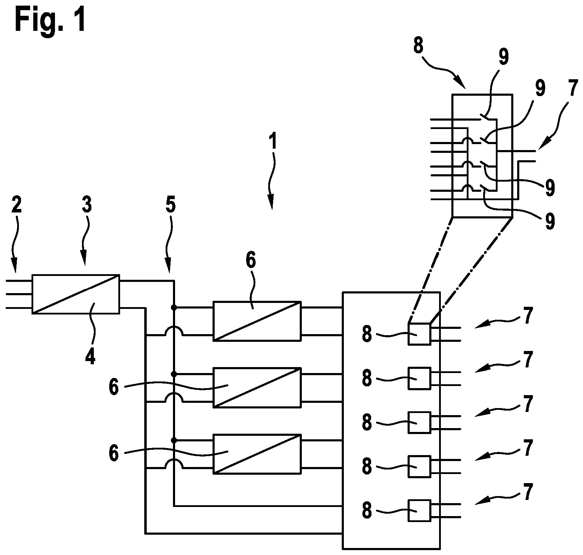

Die Figur 1 zeigt eine schematische Darstellung einer Energiebereitstellungseinrichtung 1, die zum Bereitstellen elektrischer Energie für wenigstens ein Endgerät (hier nicht dargestellt) dient. Die Energiebereitstellungseinrichtung 1 weist einen Netzanschluss 2 auf, über welchen die Energiebereitstellungseinrichtung 1 an ein Wechselstromnetz, vorzugsweise ein öffentliches Wechselstromnetz, angeschlossen ist. An den Netzanschluss 2 ist eine Gleichrichtereinrichtung 3 angeschlossen, die in dem hier dargestellten Ausführungsbeispiel einen bidirektionalen Gleichrichter 4 aufweist. Zusätzlich zu dem Gleichrichter 4 kann ein weiterer Gleichrichter, bevorzugt ein bidirektionaler Gleichrichter, vorliegen, welcher elektrisch parallel zu dem Gleichrichter 4 angeschlossen ist.

Die Gleichrichteranordnung 3 und mithin der Gleichrichter 4 dienen dem Umsetzen eines über dem Netzanschluss 2 aus dem Wechselstromnetz zugeführten Wechselstroms in einen Gleichstrom, der in einem Zwischenkreis 5 vorliegt. An den Zwischenkreis 5 sind über mehrere Spannungswandler 6 (in dem hier dargestellten Ausführungsbeispiel drei Spannungswandler 6) mehrere Gleichstromanschlüsse 7 elektrisch mit dem Zwischenkreis 5 verbindbar. Bevorzugt ist jedem der Gleichstromanschlüsse 7 eine Schalteranordnung 8 zugeordnet, wobei mithilfe der Schalteranordnungen 8 unterschiedliche Betriebsarten der Energiebereitstellungseinrichtung 1 realisierbar sind.

Eine der Schalteranordnung 8 ist zusätzlich vergrößert dargestellt. Die anderen Schalteranordnungen 8 sind vorzugsweise analog aufgebaut. Die vergrößert dargestellte Schalteranordnung 8 verfügt über mehrere Schalter 9, welche als mechanische Schalter oder als Halbleiterschalter ausgestaltet sein können. Mittels der Schalter 9 kann der entsprechende Gleichstromanschluss 7 wahlweise mit einem oder mehreren der Spannungswandler 6 und/oder unmittelbar mit dem Zwischenkreis 5 elektrisch verbunden werden.

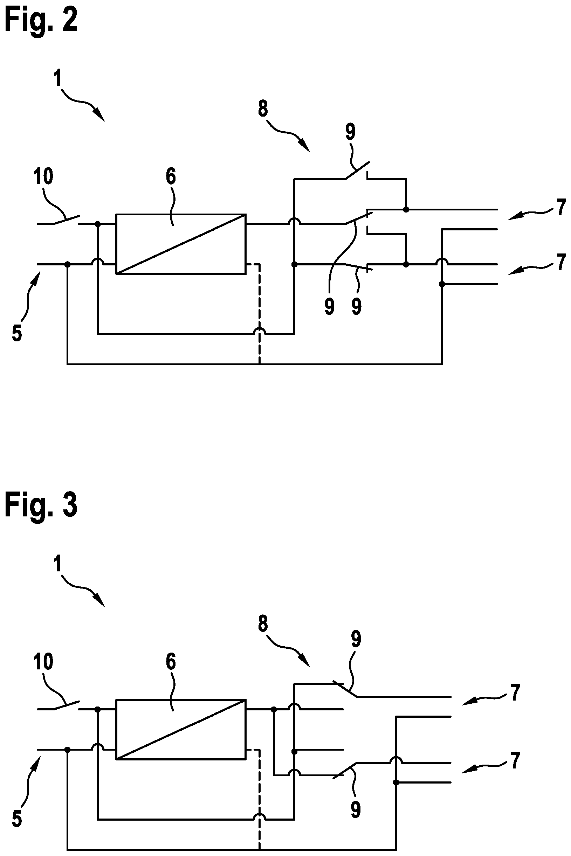

Die Figur 2 zeigt eine Detaildarstellung eines Teils der Energiebereitstellungseinrichtung 1 als ein Beispiel, wobei einer der Spannungswandler 6, die Schalteranordnung 8 und zwei der Gleichstromanschlüsse 7 konkreter dargestellt sind. In dem dargestellten Beispiel verfügt die Schalteranordnung 8 über drei Schalter 9 und ist zwei Gleichstromanschlüssen 7 zugeordnet. Die Schalteranordnung 8 ermöglicht unterschiedliche Schaltstellungen. In einer ersten Schaltstellung, die in der Figur 2 nicht dargestellt ist, sind die beiden Gleichstromanschlüsse 7 parallel zueinander an den Spannungswandler 6 angeschlossen. Ein weiterer Schalter 10 der Schalteranordnung 8 ist hierbei vorzugsweise geschlossen, sodass der Spannungswandler 6 eingangsseitig mit dem Zwischenkreis 5 elektrisch verbunden ist.

In einer zweiten Schaltstellung sind die Schalter 9 derart geschaltet, dass nur einer der Gleichstromanschlüsse 7 mit einer Ausgangsseite des Spannungswandlers 6 elektrisch verbunden ist. In einer dritten Schaltstellung sind die Schalter 9 hingegen derart geschaltet, dass einer der Gleichstromanschlüsse 7 mit der Ausgangsseite des Spannungswandlers 6 und der jeweils andere der Gleichstromanschlüsse 7 mit einer Eingangsseite des Spannungswandlers 6 elektrisch verbunden ist. In dieser Schaltstellung ist bevorzugt der Schalter 10 geöffnet, sodass der Spannungswandler 6 von dem Zwischenkreis 5 elektrisch separiert ist.

Die Figur 3 zeigt eine Detaildarstellung eines Teils der Energiebereitstellungseinrichtung 1 in einer zweiten Ausführungsform. Diese ist ähnlich zu der ersten Ausführungsform ausgebildet, sodass auf die entsprechenden Ausführungen verwiesen und nachfolgend lediglich auf die Unterschiede eingegangen wird. Diese liegen in der Ausgestaltung der Schalteranordnung 8, welche lediglich zwei Schalter 9 aufweist. Diese ermöglichen unterschiedliche Schaltstellungen.

In der hier dargestellten ersten Schaltstellung ist einer der Gleichstromanschlüsse 7 unmittelbar mit der Eingangsseite des Spannungswandlers 6, insbesondere mit dem Zwischenkreis 5, elektrisch verbunden, wohingegen der andere der Gleichstromanschlüsse 7 an die Ausgangsseite des Spannungswandlers 6 angeschlossen ist. In einer zweiten Schaltstellung sind die Schalter 9 derart angeordnet, dass wiederum die beiden Gleichstromanschlüsse 7 parallel zueinander an die Ausgangsseite des Spannungswandlers 6 angeschlossen ist. In einer dritten Schaltstellung sind die Schalter 9 derart geschaltet, dass beide Gleichstromanschlüsse 7 unmittelbar an die Eingangsseite des Spannungswandlers 6, insbesondere an den Zwischenkreis 5, angeschlossen sind.

Die beschriebene Energiebereitstellungseinrichtung 1 hat den Vorteil, dass sie äußerst flexibel einsetzbar ist, weil die Gleichstromanschlüsse 7 mithilfe der Schalteranordnungen 8 auf unterschiedlichste Art und Weise über die Spannungswandler 6 oder unmittelbar mit dem Zwischenkreis 5 oder miteinander verschaltbar sind. Entsprechend weist die Energiebereitstellungseinrichtung 1 einen hohen Integrationsgrad auf und kann beispielsweise als Haustechnikzentrale Verwendung finden.

## Patentansprüche

1. Energiebereitstellungseinrichtung (1) zum Bereitstellen elektrischer Energie für wenigstens ein Endgerät, mit einem Netzanschluss (2) zum Anschließen der Energiebereitstellungseinrichtung (1) an ein Wechselstromnetz und mit einer Gleichrichtereinrichtung (3) zum Umsetzen eines über den Netzanschluss (2) zugeführten Wechselstroms in einen Gleichstrom in einem Zwischenkreis (5), wobei mehrere Spannungswandler (6) und mehrere Gleichstromanschlüsse (7) vorliegen, wobei die Spannungswandler (6) jeweils einerseits zumindest zeitweise an den Zwischenkreis (5) elektrisch angeschlossen und andererseits zumindest zeitweise mit einem Gleichstromanschluss (7) der mehreren Gleichstromanschlüsse (7) elektrisch verbunden sind, wobei mehrere der Gleichstromanschlüsse (7) mit demselben der Spannungswandler (6) und mehrere der Spannungswandler (6) mit demselben der Gleichstromanschlüsse (7) verbindbar sind, wobei an einen ersten der Gleichstromanschlüsse (7) und einen anderen, zweiten der Gleichstromanschlüsse (7) eine Schalteranordnung (8) elektrisch angeschlossen ist, mittels der in einer ersten Schaltstellung entweder der erste Gleichstromanschluss (7) oder der zweite Gleichstromanschluss (7) mit einer Ausgangsseite des einen Spannungswandlers (6) verbunden ist und in einer zweiten Schaltstellung der erste Gleichstromanschluss und der zweite Gleichstromanschluss (7) elektrisch parallel mit der Ausgangsseite des einen Spannungswandlers (6) verbunden sind, **dadurch gekennzeichnet, dass** in einer dritten Schaltstellung der Schalteranordnung (8) der erste Gleichstromanschluss (7) mit einer Eingangsseite eines der Spannungswandler (6) und der zweite Gleichstromanschluss (7) mit der Ausgangsseite des einen Spannungswandlers (6) elektrisch verbunden und dieser Spannungswandler vom Zwischenkreis (5) getrennt ist, sodass der erste Gleichstromanschluss (7) über den einen Spannungswandler (6) mit dem zweiten Gleichstromanschluss (7) elektrisch verbindbar ist.

2. Energiebereitstellungseinrichtung nach Anspruch 1, **dadurch gekennzeichnet, dass** die Gleichrichtereinrichtung (3) einen bidirektionalen Gleichrichter (4) oder einen bidirektionalen ersten Gleichrichter (4) und einen elektrisch zu dem ersten Gleichrichter (4) parallel geschalteten unidirektionalen zweiten Gleichrichter aufweist.

3. Energiebereitstellungseinrichtung nach einem der vorhergehenden Ansprüche, **dadurch gekennzeichnet, dass** die mehreren Gleichstromanschlüsse (7) in oder an einem gemeinsamen Gehäuse der Energiebereitstellungseinrichtung (1) angeordnet sind, in welchem die Gleichrichtereinrichtung (3) und die Spannungswandler (6) vorliegen.

4. Energiebereitstellungseinrichtung nach einem der vorhergehenden Ansprüche, **dadurch gekennzeichnet, dass** zumindest einer der Gleichstromanschlüsse (7) unter Umgehung der Spannungswandler (6) elektrisch mit dem Zwischenkreis (5) verbindbar ist.

5. Energiebereitstellungseinrichtung nach einem der vorhergehenden Ansprüche, **dadurch gekennzeichnet, dass** zumindest derjenige der Spannungswandler (6), über den der erste Gleichstromanschluss (7) mit dem zweiten Gleichstromanschluss (7) verbindbar ist, mittels eines Trennschalters (10) von dem Zwischenkreis (5) elektrisch entkoppelbar ist.

6. Energiebereitstellungseinrichtung nach einem der vorhergehenden Ansprüche, **dadurch gekennzeichnet, dass** in einer vierten Schaltstellung der Schalteranordnung (8) der erste Gleichstromanschluss (7) und der zweite Gleichstromanschluss (7) jeweils mit der Eingangsseite des einen Spannungswandlers (6) elektrisch verbunden sind.

7. Verfahren zum Betreiben einer Energiebereitstellungseinrichtung (1) nach einem oder mehreren der vorhergehenden Ansprüche zum Bereitstellen elektrischer Energie für wenigstens ein Endgerät, wobei die Energiebereitstellungseinrichtung (1) über einen Netzanschluss (2) zum Anschließen der Energiebereitstellungseinrichtung (1) an ein Wechselstromnetz und über eine Gleichrichtereinrichtung (3) zum Umsetzen eines über den Netzanschluss (2) zugeführten Wechselstroms in einen Gleichstrom in einem Zwischenkreis (5) verfügt, wobei mehrere Spannungswandler (6) und mehrere Gleichstromanschlüsse (7) vorliegen, wobei die Spannungswandler (6) jeweils einerseits zumindest zeitweise an den Zwischenkreis (5) elektrisch angeschlossen und andererseits zumindest zeitweise mit einem Gleichstromanschluss (7) der mehreren Gleichstromanschlüsse (7) elektrisch verbunden werden, wobei mehrere der Gleichstromanschlüsse (7) mit demselben der Spannungswandler (6) und mehrere der Spannungswandler (6) mit demselben der Gleichstromanschlüsse (7) verbunden werden können, wobei an einen ersten der Gleichstromanschlüsse (7) und einen anderen, zweiten der Gleichstromanschlüsse (7) eine Schalteranordnung (8) elektrisch angeschlossen ist, mittels der in einer ersten Schaltstellung entweder der erste Gleichstromanschluss (7) oder der zweite Gleichstromanschluss (7) mit einer Ausgangsseite des einen Spannungswandlers (6) verbunden ist und in einer zweiten Schaltstellung der erste Gleichstromanschluss und der zweite Gleichstromanschluss (7) elektrisch parallel mit der Ausgangsseite des einen Spannungswandlers (6) verbunden sind, **dadurch gekennzeichnet, dass** in einer dritten Schaltstellung der Schalteranordnung (8) der erste Gleichstromanschluss (7) mit einer Eingangsseite eines der Spannungswandler (6) und der zweite Gleichstromanschluss (7) mit der Ausgangsseite des einen Spannungswandlers (6) elektrisch verbunden und dieser Spannungswandler vom Zwischenkreis (5) getrennt ist, sodass der erste Gleichstromanschluss (7) über den Spannungswandler (6) mit dem zweiten Gleichstromanschluss (7) elektrisch verbunden werden kann.

## Claims

1. Energy supply apparatus (1) for supplying electrical energy for at least one terminal, having a power connector (2) for connecting the energy supply apparatus (1) to an AC current network and having a rectifier apparatus (3) for transforming an AC current supplied via the power connector (2) into a DC current in an intermediate circuit (5), wherein several voltage converters (6) and several DC current connectors (7) are present, wherein the voltage converters (6) are in each case on the one hand electrically connected at least temporarily to the intermediate circuit (5) and on the other hand electrically connected at least temporarily to a DC current connector (7) of the several DC current connectors (7), wherein several ones of the DC current connectors (7) can be connected to the same one of the voltage converters (6) and several ones of the voltage converters (6) can be connected to the same one of the DC current connectors (7), wherein a switch arrangement (8) is electrically connected to a first one of the DC current connectors (7) and another, second one of the DC current connectors, by means of which switch arrangement in a first switching position either the first DC current connector (7) or the second DC current connector (7) is connected to an output side of the one voltage converter (6) and in a second switching position the first DC current connector and the second DC current connector (7) are connected in an electrically parallel manner with the output side of the one voltage converter (6), **characterised in that** in a third switching position of the switching arrangement (8) the first DC current connector (7) is electrically connected to an input side of one of the voltage converters (6) and the second DC current connector (7) is electrically connected to the output side of the one voltage converter (6) and this voltage converter is isolated from the intermediate circuit (5), such that the first DC current connector (7) can be connected via the one voltage converter (6) to the second DC current connector (7).

2. Energy supply apparatus according to claim 1, **characterised in that** the rectifier apparatus (3) has a bidirectional rectifier (4) or a bidirectional first rectifier (4) and a unidirectional second rectifier electrically connected in parallel to the first rectifier (4).

3. Energy supply apparatus according to any of the preceding claims, **characterised in that** the several DC current connectors (7) are arranged in or on a common housing of the energy supply apparatus (1), in which the rectifier apparatus (3) and the voltage converter (6) are present.

4. Energy supply apparatus according to any of the preceding claims, **characterised in that** at least one of the DC current connectors (7) can be electrically connected to the intermediate circuit bypassing the voltage converter (6).

5. Energy supply apparatus according to any of the preceding claims, **characterised in that** at least the one of the voltage converters (6), via which the first DC current connector (7) can be connected to the second DC current connector (7), can be electrically decoupled from the intermediate circuit by means of an isolating switch (10).

6. Energy supply apparatus according to any of the preceding claims, **characterised in that** in a fourth switching position of the switch arrangement (8) the first DC current connecter (7) and the second DC current connector (7) are electrically connected in each case with the input side of the one voltage converter (6).

7. Method for operating an energy supply apparatus (1) according to one or more of the preceding claims for providing electrical energy for at least one terminal, wherein the energy supply apparatus (1) has a power connector (2) for connecting the energy supply apparatus (1) to an AC current network and a rectifier apparatus (3) for transforming an AC current supplied via the power connector (2) into a DC current in an intermediate circuit (5), wherein several voltage converters (6) and several DC connectors (7) are present, wherein the voltage converters (6) are in each case on the one hand electrically connected to the intermediate circuit (5) at least temporarily and on the other hand electrically connected to a DC current connector (7) of the several DC current connectors (7) at least temporarily, wherein several of the DC current connectors (7) can be connected to the same one of the voltage converters (6) and several of the voltage converters (6) can be connected to the same one of the DC current connectors (7), wherein a switch arrangement (8) is electrically connected to a first one of the DC current connectors (7) and another sweetens of the DC current connectors (7), by means of which switch arrangement in a first switching position either the first DC current connector (7) or the second DC current connector (7) is connected to an output side of the one voltage converter (6) and in a second switching position the first DC current connector and the second DC current connector (7) are connected electrically in parallel to the output side of the one voltage converter (6), **characterised in that** in a third switching position of the switching arrangement (8) the first DC current connector (7) is electrically connected to an input side of one of the voltage converters (6) and the second DC current connector (7) is connected to an output side of the one voltage converter (6) and this voltage converter is isolated from the intermediate circuit (5), such that the first DC current connector (7) can be electrically conencted via the voltage converter (6) to the second DC current connector (7).

## Revendications

1. Appareil de fourniture d'énergie (1) destiné à fournir de l'énergie électrique à au moins un dispositif terminal, avec une connexion réseau (2) pour connecter l'appareil de fourniture d'énergie (1) à un réseau de courant alternatif et avec un appareil redresseur (3) pour convertir un courant alternatif transmis via la connexion réseau (2) en un courant continu dans un circuit intermédiaire (5), dans lequel plusieurs convertisseurs de tension (6) et plusieurs connexions de courant continu (7) sont présents, dans lequel les convertisseurs de tension (6) sont chacun d'une part connectés électriquement au moins temporairement au circuit intermédiaire (5) et d'autre part connectés électriquement au moins temporairement à une connexion de courant continu (7) des plusieurs connexions de courant continu (7), dans lequel plusieurs des connexions de courant continu (7) peuvent être connectées aux mêmes des convertisseurs de tension (6) et plusieurs des convertisseurs de tension (6) peuvent être connectés aux mêmes des connexions de courant continu (7), dans lequel un agencement de commutateur (8) est connecté électriquement au niveau d'une première des connexions de courant continu (7) et d'une autre seconde des connexions de courant continu (7), au moyen duquel, dans une première position de commutation, soit la première connexion de courant continu (7) soit la seconde connexion de courant continu (7) est connectée à un côté de sortie d'un convertisseur de tension (6) et, dans une deuxième position de commutation, la première connexion de courant continu et la seconde connexion de courant continu (7) sont connectées électriquement en parallèle au côté de sortie d'un convertisseur de tension (6), **caractérisé en ce que**, dans une troisième position de commutation de l'agencement de commutateur (8), la première connexion de courant continu (7) est connectée électriquement à un côté d'entrée de l'un des convertisseurs de tension (6) et la seconde connexion de courant continu (7) est connectée électriquement au côté de sortie de l'un convertisseur de tension (6) et ce convertisseur de tension est séparé du circuit intermédiaire (5), de sorte que la première connexion de courant continu (7) peut être connectée électriquement à la seconde connexion de courant continu (7) via l'un convertisseur de tension (6).

2. Appareil de fourniture d'énergie selon la revendication 1, **caractérisé en ce que** l'appareil redresseur (3) présente un redresseur bidirectionnel (4) ou un premier redresseur bidirectionnel (4) et un second redresseur unidirectionnel commuté électriquement en parallèle au premier redresseur (4).

3. Appareil de fourniture d'énergie selon l'une quelconque des revendications précédentes, **caractérisé en ce que** les plusieurs connexions de courant continu (7) sont agencées dans ou sur un boîtier commun de l'appareil de fourniture d'énergie (1), dans lequel l'appareil redresseur (3) et le convertisseur de tension (6) sont présents.

4. Appareil de fourniture d'énergie selon l'une quelconque des revendications précédentes, **caractérisé en ce qu'**au moins une des connexions de courant continu (7) peut être connectée électriquement au circuit intermédiaire (5) en contournant le convertisseur de tension (6).

5. Appareil de fourniture d'énergie selon l'une quelconque des revendications précédentes, **caractérisé en ce qu'**au moins l'un des convertisseurs de tension (6), par l'intermédiaire duquel la première connexion de courant continu (7) peut être connectée à la seconde connexion de courant continu (7), peut être découplé électriquement du circuit intermédiaire (5) au moyen d'un disjoncteur (10).

6. Appareil de fourniture d'énergie selon l'une quelconque des revendications précédentes, **caractérisé en ce que** dans une quatrième position de commutation de l'agencement de commutateur (8), la première connexion de courant continu (7) et la seconde connexion de courant continu (7) sont chacune connectées électriquement au côté d'entrée d'un convertisseur de tension (6).

7. Procédé de fonctionnement d'un appareil de fourniture d'énergie (1) selon une ou plusieurs des revendications précédentes pour fournir de l'énergie électrique à au moins un dispositif terminal, dans lequel l'appareil de fourniture d'énergie (1) dispose d'une connexion réseau (2) pour connecter l'appareil de fourniture d'énergie (1) à un réseau de courant alternatif et d'un appareil redresseur (3) pour convertir un courant alternatif transmis via la connexion réseau (2) en un courant continu dans un circuit intermédiaire (5), dans lequel plusieurs convertisseurs de tension (6) et plusieurs connexions de courant continu (7) sont présents, dans lequel les convertisseurs de tension (6) sont chacun d'une part connectés électriquement au moins temporairement au circuit intermédiaire (5) et d'autre part connectés électriquement au moins temporairement à une connexion de courant continu (7) des plusieurs connexions de courant continu (7), dans lequel plusieurs des connexions de courant continu (7) peuvent être connectées aux mêmes des convertisseurs de tension (6) et plusieurs des convertisseurs de tension (6) peuvent être connectés aux mêmes des connexions de courant continu (7), dans lequel un agencement de commutateur (8) est connecté électriquement au niveau d'une première des connexions de courant continu (7) et d'une autre seconde des connexions de courant continu (7), au moyen duquel, dans une première position de commutation, soit la première connexion de courant continu (7) soit la seconde connexion de courant continu (7) est connectée à un côté de sortie d'un convertisseur de tension (6) et, dans une deuxième position de commutation, la première connexion de courant continu et la seconde connexion de courant continu (7) sont connectées électriquement en parallèle au côté de sortie d'un convertisseur de tension (6), **caractérisé en ce que** dans une troisième position de commutation de l'agencement de commutateur (8), la première connexion de courant continu (7) est connectée électriquement à un côté d'entrée d'un des convertisseurs de tension (6) et la seconde connexion de courant continu (7) est connectée électriquement au côté de sortie d'un convertisseur de tension (6) et ce convertisseur de tension est séparé du circuit intermédiaire (5), de sorte que la première connexion de courant continu (7) peut être connectée électriquement à la seconde connexion de courant continu (7) via le convertisseur de tension (6).
